# EUROPEAN PATENT SPECIFICATION

(11) **EP 0 568 202 B1**
(45) Date of publication and mention of the grant of the patent: **20.11.1996**
(21) Application number: 93302640.3
(22) Date of filing: 05.04.1993
(51) Int. Cl.: C04B 7/44, F27B 7/34, F23G 7/12

(54) **Method of incinerating waste in a rotary kiln plant, and plant therefor**
Abfallverbrennungsverfahren im Drehrohrofen sowie Anlage hierfür
Méthode d'incinération de déchets dans un four rotatif et installation à cet effet

(30) Priority: 29.04.1992 DK 553/92
(43) Date of publication of application: 03.11.1993
(73) Proprietor: F.L. Smidth & Co. A/S, DK-2500 Valby, Copenhagen (DK)
(72) Inventor: Ohlsen, Ib, DK-2500 Valby (DK); Hartington, Hans Henrik, DK-2500 Valby (DK)
(74) Representative: Jackson, Peter Arthur

(56) References cited:
- EP-A- 0 382 673
- DE-A- 2 343 954
- DE-A- 2 637 330
- GB-A- 2 015 706
- US-A- 5 086 716
- PATENT ABSTRACTS OF JAPAN vol. 5, no. 90 (M-73)(762) 12 June 1981

## Description

The invention relates to a method for introducing and incinerating solid combustible waste, such as automobile tyres, in a rotary kiln plant and to a rotary kiln plant for carrying out the method.

It has proven to be advantageous both from an economic and environmental viewpoint to dispose of various types of combustible waste by incineration in a working rotary kiln, for example for cement production, to provide useful heat in addition to the firing with the normal fuel. If the waste is liquid, gaseous or pulverulent, the waste can normally be incinerated by using known burner equipment. However, if the waste is in solid form, with its lump size being such that the single lumps cannot be conveyed through the kiln by means of the gas stream, specialized methods are needed to inject the waste sufficiently far into the rotary part of the kiln so that complete incineration is achieved before the waste reaches the outlet of the kiln. This applies particularly to long rotary kilns where firing from the inlet end of the kiln cannot be applied owing to the temperature here being inadequate for complete incineration to be achieved.

Several examples of methods and apparatus for burning solid waste in rotary kilns are known from the patent literature.

US-A-4,850,290 discloses a method for firing solid waste through the shell of the rotary kiln via a sluicing arrangement. US-A-4,984,983 further discloses the possibility of introducing waste through the kiln shell, mentioning also an ejector capable of injecting the waste items into the kiln.

The aforementioned methods and apparatus involve a number of disadvantages. For one thing, the mechanical construction of the sluicing arrangement is very complicated, and that part of its feed pipe which lies within the kiln shell is subjected to substantial mechanical and thermal impacts, and this may reduce the service life of the equipment.

It is the object of the present invention to provide a method and an apparatus for introducing and incinerating solid waste by means of which the aforementioned disadvantages are remedied.

This is achieved by means of method of incinerating solid combustible waste, in a rotary kiln plant to provide heat for treating another material being transported through the kiln, characterized in that the waste is introduced into a stationary outlet casing at the material outlet end of the kiln and remains there until a substantially complete incineration has been achieved by contact with a hot airstream flowing through the outlet casing.

The invention also includes a rotary kiln plant for carrying out the method, the plant comprising a rotary kiln; a stationary outlet casing at the material outlet end of the kiln; supporting means within the outlet casing for supporting the waste during incineration; and an inlet in the wall of the casing through which inlet waste can be introduced into the casing for being supported by the supporting means.

In this way the apparatus as well as the method for introducing and incinerating the waste are simplified, since the waste can be introduced through a stationary wall of the outlet casing (sometimes called the kiln hood), without any need to inject or shoot the waste into the rotary kiln.

The adequate retention time of the waste in the outlet casing of the rotary kiln nay be achieved by means of special mechanisms which support and retain the waste in the outlet casing until complete incineration has been achieved. For example, this may be achieved by introducing the waste in such a manner that it rests on a burner pipe of the rotary kiln during the incineration, or by depositing the waste, especially where the latter consists of automobile tyres, around a substantially horizontal pipe, one end of which extends through the kiln outlet casing, the waste being pushed along the pipe, which thus supports and retains the waste during the incineration. Alternatively the waste may be introduced on a one or more shelves located in the kiln outlet casing and possibly provided with a horizontal surface, and pushed forward on the shelf or shelves, which support(s) the waste during the incineration.

If the burner pipe of the rotary kiln is used for introducing and supporting the waste, it is preferred that the burner pipe, over at least some of its length, is formed with a flat or troughed upper side for improved supporting of the waste. It is further preferred that the burner pipe is provided with a number of grooves in its surface so as to ensure good air supply to the waste during the incineration. The burner pipe may be provided with a projection at the end of the burner pipe to assure that any unburned, residual waste drops down to one of the sides of the pipe prior to reaching a nozzle of the burner pipe.

If a horizontal pipe is used for introducing and supporting the waste, it is preferred that the pipe is cooled by means of a liquid or a gas, that the pipe extends through the kiln outlet casing transversely to the kiln axis and that any non-combustible waste items, such as steel reinforcements from automobile tyres, are retained on the pipe until discharged through the wall of the outlet casing.

If shelves are used for introducing and supporting the waste, it is preferred that the or each shelf is provided with a number of grooves in its surface in order to promote air supply to the waste for the incineration thereof.

The or each shelf may extends along a wall of the outlet casing so that waste can be introduced and advanced in the longitudinal direction thereof.

The kiln outlet casing may be equipped with one or more openings, through which any unburned, residual waste can be extracted. The or each shelf may slope laterally downwards towards the wall of the kiln outlet casing along which it extends.

The invention will now be described in further details with reference to the accompanying diagrammatical drawings, in which:
Fig. 1 is a longitudinal section through part of a first embodiment of a plant for carrying out the method according to the invention, in which the upper side of a burner pipe is used for introducing and supporting the waste;
Fig. 2 is a cross-section of the burner pipe in Fig. 1;
Fig. 3 is a sectional view through part of a second embodiment of a plant for carrying out the method according to the invention, in which a pipe is used for introducing and supporting the waste;
Fig. 4 shows a modification of Fig. 3;
Fig. 5 is a sectional view of part of a third embodiment of an apparatus for carrying out the method according to the invention, in which the outlet casing of a rotary kiln is provided with a number of internal shelves on which the waste can be introduced and supported;
Fig. 6 is a sectional view of part of a fourth embodiment of an apparatus for carrying out the method according to the invention, in which the outlet casing of a rotary kiln is provided with a number of internal shelves on which the waste can be introduced and supported; and,
Fig. 7 shows a cross-section of the shelf in Fig. 5.

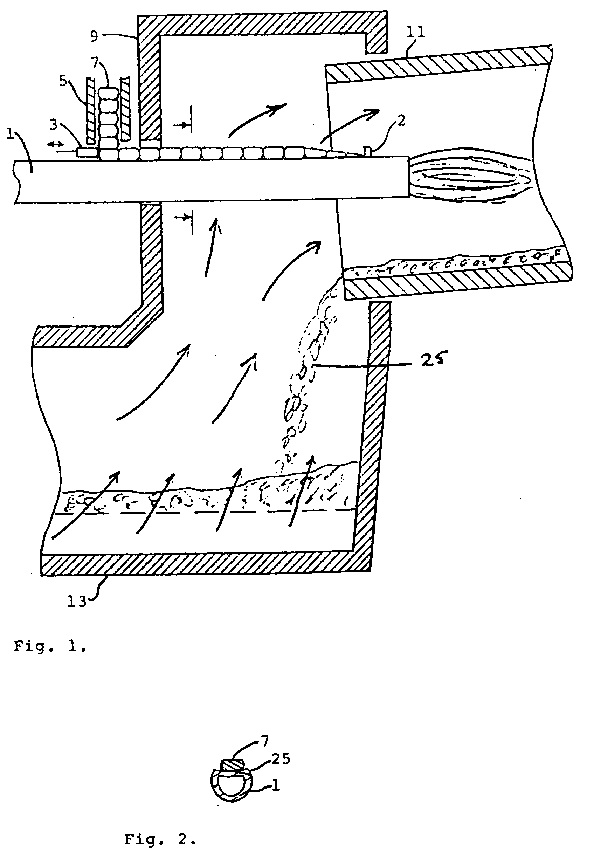

Fig. 1 depicts a sectional view of the outlet part of a rotary kiln 11, for example a kiln for burning cement clinker 25, with an outlet casing 9 and a grate cooler 13, all of which elements are of a generally known design.

For carrying out the method according to the invention, the waste items 7 are placed in a shaft or feed hopper 5 from which the waste, while deposited on the burner pipe 1 and by means of a pushing device 3, is pushed into the chamber which is surrounded by the outlet casing 9, where the waste is ignited and burned off under the influence of the hot airstream flowing from the grate cooler 13 towards the rotary kiln 11.

As shown in Fig. 2 the cross-section of the burner pipe may have a flat or slightly troughed upper side which may further be equipped with a number of grooves 25 in order to improve the supply of combustion air to the waste. The burner pipe 1 may further be provided with a boss or projection 2 in order to ensure that any unburned, residual waste drops down to one of the sides of the pipe, hence preventing the waste from reaching and disturbing the main flame from the burner pipe 1. The remaining design features of the burner 1 are known.

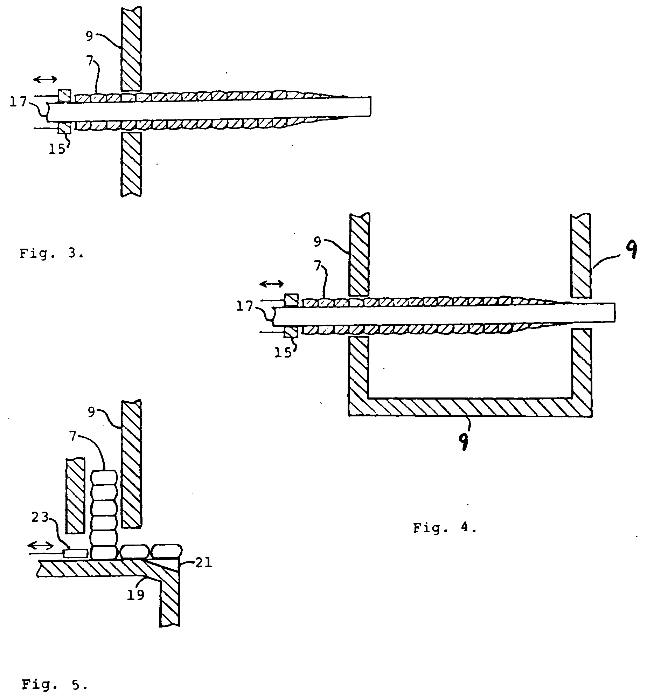

Fig. 3 shows a second embodiment where the waste objects 7, in the present case automobile tyres which are cut at some point on the circumference, are mounted around a pipe 17 which is led through an opening in the kiln outlet casing 9. Inside the pipe 17 there may be one or several pipes for conveying a gaseous or liquid cooling medium, preferably atmospheric air, water or oil. By means of a known pushing device 15 the waste objects can be introduced into the outlet casing 9 where they are burned off.

Fig. 4 shows a modification in which the pipe 17 extends transversely to the kiln axis.

Fig. 5 shows a third embodiment where the kiln outlet casing 9 is provided with a horizontal shelf 19 on which the waste objects 7 are introduced by means of a known pushing device 23 and burned off. The shelf may be provided with grooves 21 in order to improve the supply of combustion air.

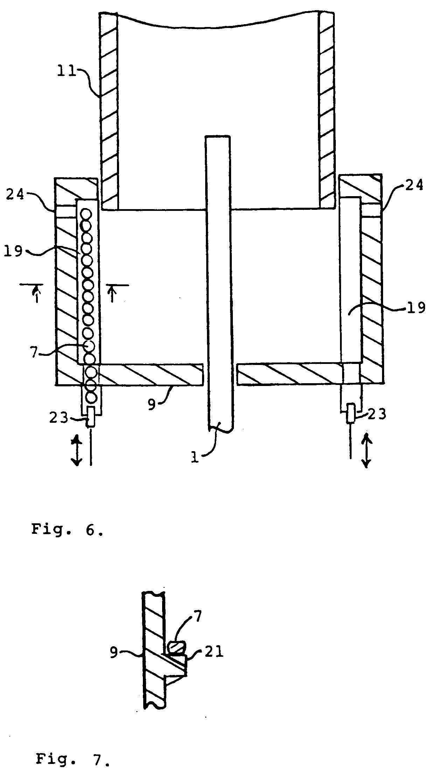

Figs. 6 and 7 show a fourth embodiment where a shelf 19, in the present case possibly (although not shown) sloping downwards towards the adjacent inner wall of the kiln outlet casing 9, is fitted in such a manner that the waste objects can be introduced in the longitudinal direction of the shelf parallel to the wall of the outlet casing 9. The outlet casing may be provided with an opening 24 at the opposite end of the shelf for extraction of any unburned, residual waste, and the shelf 19 may be provided with grooves 21 in order to improve the supply of combustion air.

## Claims

1. A method of incinerating solid combustible waste (7), in a rotary kiln plant (9, 11) to provide heat for treating another material being transported through the kiln, characterized in that the waste (7) is introduced into a stationary outlet casing (9) at the material outlet end of the kiln (11) and remains there until a substantially complete incineration has been achieved by contact with a hot airstream flowing through the outlet casing.

2. A method according to claim 1, wherein the waste (7) is introduced in such a manner that it rests on a burner pipe (1) of the kiln during the incineration.

3. A method according to claim 1, wherein, the waste (7) is hung around a substantially horizontal pipe (17), one end of which extends through the outlet casing (9), and the waste is pushed along the pipe (17), which thus supports the waste (7) during the incineration.

4. A method according to claim 3, wherein the pipe (17) is cooled by means of a liquid or a gas.

5. A method according to claim 1, wherein the waste (7) is introduced on one or more shelves (19), located in the outlet casing (9), the waste being pushed forward on the shelf or shelves (19), which support(s) the waste during the incineration.

6. A rotary kiln plant for carrying out the method according to any one of the preceding claims, the plant comprising a rotary kiln (11); a stationary outlet casing (9) at the material outlet end of the kiln; supporting means (1,17,19) within the outlet casing for supporting the waste during incineration; and an inlet in the wall of the casing through which inlet waste can be introduced into the casing for being supported by the supporting means.

7. A plant according to claim 6, wherein the supporting means is provided by a burner pipe (1), which is formed, over at least some of its length, with a flat or troughed upper side for supporting the waste (7).

8. A plant according to claim 7, wherein the burner pipe (1) is provided with a plurality of grooves (25) in its surface to promote air supply to waste (7) on the burner pipe.

9. A plant according to claim 7 or claim 8, wherein the burner pipe (1) is provided with a projection (2) to ensure that any unburned, residual waste drops down to one of the sides of the burner pipe (1) prior to reaching a nozzle end of the burner pipe (1).

10. A plant according to claim 6, wherein the supporting means comprises a substantially horizontal pipe (17) extending into the outlet casing (9).

11. A plant according to claim 10, wherein the pipe (17) extends transversely to the axis of the kiln (11).

12. A plant according to claim 6, wherein the supporting means comprises one or more shelves (19) within the outlet casing.

13. A plant according to claim 12, wherein the or each shelf (19) is provided with a plurality of grooves (21) in the surface thereof to promote air supply to the waste thereon.

14. A plant according to claim 12 or claim 13, wherein the or each shelf (19) extends along a wall of the outlet casing so that waste can be introduced and advanced in the longitudinal direction thereof.

15. A plant according to claim 14, wherein the outlet casing (9) is equipped with one or more openings (24) through which any unburned, residual waste can be extracted.

16. A plant according to claim 14 or claim 15, wherein the or each shelf (19) slopes laterally downwards towards the wall of the outlet casing (9) along which it extends.

17. A plant according to any one of claims 6 to 16, further including means (3,15,23) for pushing waste through the inlet and along the supporting means.

## Patentansprüche

1. Verfahren zum Veraschen von festem brennbarem Abfall (7) in einer Drehofenanlage (9, 11), um Hitze zum Behandeln von anderem Material zu liefern, welches durch da Ofen transportiert wird, dadurch gekennzeichnet, daß der Abfall (7) in ein stationäres Auslaßgehäuse (9) am Materialauslaßende des Ofens (11) eingebracht wird und dort verbleibt, bis eine im wesentlichen vollständige Veraschung durch Kontakt mit einem durch das Auslaßgehäuse strömenden Luftstrom erreicht ist.

2. Verfahren nach Anspruch 1, bei dem der Abfall (7) derart eingebracht wird, daß er während der Veraschung auf einem Brennerrohr (1) des Ofens aufliegt.

3. Verfahren nach Anspruch 1, bei dem der Abfall (7) um ein im wesentlichen horizontales Rohr (17) herumgehängt wird, dessen eines Ende sich durch das Auslaßgehäuse (9) erstreckt, und der Abfall das Rohr (17) entlang geschoben wird, welches auf diese Weise da Abfall (7) während der Veraschung trägt.

4. Verfahren nach Anspruch 3, bei dem das Rohr (17) mittels einer Flüssigkeit oder einem Gas gekühlt wird.

5. Verfahren nach Anspruch 1, bei dem der Abfall (7) auf einem oder mehreren im Auslaßgehäuse (9) angeordneten Gestellen (19) eingebracht wird, wobei der Abfall auf dem Gestell oder den Gestellen (19) vorwärts geschoben wird, welche(s) den Abfall während der Veraschung trägt bzw. tragen.

6. Drehofenanlage zum Ansführen des Verfahrens nach einem der vorstehenden Ansprüche, wobei die Anlage aufweist: einen Drehofen (11); ein stationäres Auslaßgehäuse (9) am Materialauslaßende des Ofens; eine innerhalb des Auslaßgehäuses befindliche Trageeinrichtung (1, 17, 19) zum Tragen des Abfalls während der Veraschung; und einen Einlaß in der Wand des Gehäuses, durch welches Zuführabfall in das Gehäuse eingebracht werden kann, um durch die Trageeinrichtung getragen zu werden.

7. Anlage nach Anspruch 6, bei der die Trageeinrichtung durch ein Brennerrohr (1) vorgesehen ist, welche über mindestens einen Teil seiner Länge mit einer flachen oder mit einer Mulde versehenen Oberseite zum Tragen des Abfalls (7) ausgebildet ist.

8. Anlage nach Anspruch 7, bei der das Brennerrohr (1) mit einer Mehrzahl von Nuten (25) in seiner Oberfläche versehen ist, um die Luftzufuhr zu dem Abfall (7) auf dem Brennerrohr zu fördern.

9. Anlage nach Anspruch 7 oder 8, bei der das Brennerrohr (1) mit einem Vorsprung (2) versehen ist, um sicherzustellen, daß jeglicher unverbrannter, verbleibender Rest zu einer der Seiten des Brennerrohrs (1) herabfällt, bevor er ein Düsenende des Brennerrohrs (1) erreicht.

10. Anlage nach Anspruch 6, bei der die Trageeinrichtung ein im wesentlichen horizontales Rohr (17) aufweist, das sich in das Auslaßgehäuse (9) erstreckt.

11. Anlage nach Anspruch 10, bei der sich das Rohr (17) quer zur Achse des Ofens (11) erstreckt.

12. Anlage nach Anspruch 6, bei der die Trageeinrichtung ein oder mehrere innerhalb des Auslaßgehäuses befindliche Gestelle (19) aufweist.

13. Anlage nach Anspruch 12, bei der das oderjedes Gestell (19) in seiner Oberfläche mit einer Mehrzahl von Nuten (21) versehen ist, um die Luftzufuhr zu dem auf diesem befindlichen Abfall (7) zu fördern.

14. Anlage nach Anspruch 12 oder 13, bei der das oder jedes Gestell (19) sich entlang einer Wand des Auslaßgehäuses erstreckt, so daß Abfall eingebracht und in deren Längsrichtung gefördert werden kann.

15. Anlage nach Anspruch 14, bei der das Auslaßgehäuse (9) mit einer oder mehreren Öffnungen (24) ausgerüstet ist, durch welche jeglicher unverbrannter, verbleibender Rest entnommen werden kann.

16. Anlage nach Anspruch 14 oder 15, bei der das oderjedes Gestell (19) schräg nach unten in Richtung der Wand des Auslaßgehäuses (9) abfällt, entlang dem es sich erstreckt.

17. Anlage nach einem der Ansprüche 6 bis 16, die weiter eine Einrichtung (3, 15, 23) zum Schieben von Abfall durch den Einlaß und entlang der Trageeinrichtung beinhaltet.

## Revendications

1. Procédé d'incinération de déchets combustibles solides (7) dans une installation (9, 11) à four rotatif, destiné à fournir de la chaleur pour le traitement d'une autre matière transportée dans le four, caractérisé en ce que les déchets (7) sont introduits dans un carter fixe de sortie (9) à l'extrémité de sortie de la matière du four (11) et restent à cet emplacement jusqu'à ce qu'une incinération pratiquement totale ait été réalisée par contact avec un courant d'air chaud circulant dans le carter de sortie.

2. Procédé selon la revendication 1, dans lequel les déchets (7) sont introduits de manière qu'ils soient en appui sur le tube (1) de brûleur du four pendant l'incinération.

3. Procédé selon la revendication 1, dans lequel les déchets (7) sont suspendus autour d'une conduite pratiquement horizontale (17) dont une extrémité passe dans le carter de sortie (9), et les déchets sont poussés le long de la conduite (17) qui supporte ainsi les déchets (7) au cours de l'incinération.

4. Procédé selon la revendication 3, dans lequel la conduite (17) est refroidie par un liquide ou un gaz.

5. Procédé selon la revendication 1, dans lequel les déchets (7) sont introduits sur une ou plusieurs étagères (19) placées dans le carter de sortie (9), les déchets étant poussés vers l'avant sur l'étagère ou les étagères (19) qui supportent les déchets pendant l'incinération.

6. Installation à four rotatif destinée à la mise en oeuvre du procédé selon l'une quelconque des revendications précédentes, l'installation comprenant un four rotatif (11), un carter fixe de sortie (9) placé à l'extrémité de sortie de matière du four, un dispositif (1, 17, 19) de support placé dans le carter de sortie et destiné à supporter les déchets pendant l'incinération, et une entrée formée dans la paroi du carter et par laquelle les déchets d'entrée peuvent être introduits dans le carter afin qu'ils soient supportés par le dispositif de support.

7. Installation selon la revendication 6, dans laquelle le dispositif de support est formé par une conduite (1) de brûleur qui, sur une partie au moins de sa longueur, a une face supérieure plate ou en forme de rigole destinée à supporter les déchets (7).

8. Installation selon la revendication 7, dans laquelle la conduite (1) de brûleur a plusieurs gorges (25) à sa surface, destinées à favoriser la transmission d'air aux déchets (7) placés sur le tube de brûleur.

9. Installation selon la revendications 7 ou 8, dans laquelle la conduite (1) de brûleur possède une saillie (2) destinée à assurer la chute des déchets résiduels imbrûlés éventuels d'un côté de la conduite (1) de brûleur avant d'atteindre l'extrémité de la tuyère de la conduite (1) de brûleur.

10. Installation selon la revendication 6, dans laquelle le dispositif de support comprend une conduite pratiquement horizontale (17) pénétrant dans le carter de sortie (9).

11. Installation selon la revendication 10, caractérisée en ce que la conduite (17) est placée transversalement à l'axe du four (11).

12. Installation selon la revendication 6, dans laquelle le dispositif de support comporte une ou plusieurs étagères (19) placées dans le carter de sortie.

13. Installation selon la revendication 12, dans laquelle l'étagère ou chaque étagère (19) a plusieurs gorges (21) formées dans sa surface et destinées à favoriser la transmission d'air aux déchets portés par la surface.

14. Installation selon la revendication 12 ou 13, dans laquelle l'étagère ou chaque étagère (19) est placée le long d'une paroi du carter de sortie de manière que les déchets puissent être introduits dans la direction longitudinale et avancent dans cette direction.

15. Installation selon la revendication 14, dans laquelle le carter de sortie (9) comporte une ou plusieurs ouvertures (24) par lesquelles les déchets résiduels imbrûlés éventuels peuvent être extraits.

16. Installation selon la revendication 14 ou 15, dans laquelle l'étagère ou chaque étagère (19) est inclinée latéralement vers le bas vers la paroi du carter de sortie (9) le long duquel elle est disposée.

17. Installation selon l'une quelconque des revendications 6 à 16, comprenant en outre un dispositif (3, 15, 23) de poussée des déchets par la sortie et le long du dispositif de support.
